# EUROPEAN PATENT SPECIFICATION

(11) **EP 1 373 406 B1**
(45) Date of publication and mention of the grant of the patent: **30.08.2006**
(21) Application number: 02702963.6
(22) Date of filing: 04.03.2002
(51) Int. Cl.: C08L 35/06, C08L 25/12, C08G 81/00, C08L 77/00

(54) **CHAIN BRANCHING AGENT AND POLYAMIDE COMPOSITION CONTAINING THE SAME**
VERKETTUNGSMITTEL UND DIESES ENTHALTENDE POLYAMIDZUSAMMENSETZUNG
AGENT DE RAMIFICATION DE CHAINE ET COMPOSITION DE POLYAMIDE LE CONTENANT

(30) Priority: 06.03.2001 NL 1017503
(43) Date of publication of application: 02.01.2004
(73) Proprietor: DSM IP Assets B.V., 6411 TE Heerlen (NL)
(72) Inventor: CREVECOEUR, Jeroen, Joost, NL-6211 BH Maastricht (NL); TIJSSEN, Johannes, NL-6176 EZ Spaubeek (NL); VEENSTRA, Jannes, NL-7814 PE Weerdinge (NL)
(74) Representative: Krijgsman, Willem
(86) International application number: PCT/NL2002/000139
(87) International publication number: WO 2002/070605

(56) References cited:
- EP-A- 0 068 132
- EP-A- 0 137 296
- EP-A- 0 464 540
- EP-A- 0 475 203
- WO-A-93/07212
- DE-A- 1 950 599
- DE-A- 2 160 778
- NL-C- 1 005 985
- DATABASE WPI Section Ch, Week 198451 Derwent Publications Ltd., London, GB; Class A13, AN 1984-315400 XP002183756 & JP 59 197448 A (DAICEL CHEM IND LTD), 9 November 1984 (1984-11-09)
- DATABASE WPI Section Ch, Week 198735 Derwent Publications Ltd., London, GB; Class A13, AN 1987-247035 XP002183757 & JP 62 169842 A (DAICEL CHEM IND LTD), 27 July 1987 (1987-07-27)

## Description

The invention relates to a chain branching agent containing anhydride groups. The invention also relates to a process for preparing a polyamide composition with non-Newtonian melt flow behaviour as well as a polyamide composition obtainable by the process and use thereof for the manufacture of a moulded article.

Such a chain branching agent is known from EP-A-0495363. As chain branching agent said publication describes a copolymer containing anhydride groups, preferably a copolymer of maleic anhydride and styrene (SMA), which chain branching agent is used for the preparation of a polyamide composition with increased melt viscosity that exhibits non-Newtonian melt flow behaviour. Such a polyamide composition is prepared by melt mixing a low-viscosity polyamide with the chain branching agent.

Non-Newtonian melt flow behaviour is here understood to mean rheological behaviour involving an increase in the melt viscosity of a molten polymer composition with decreasing shear rate. This phenomenon is also referred to as structural viscosity. Anhydride groups are here understood to mean anhydride groups or groups from which anhydride groups can be formed under processing conditions, for example a dicarboxylic acid group.

A drawback of the known chain branching agent from EP-A-0495363 is that melt mixing of chain branching agent and polyamide involves a high risk of the formation of gel particles. Another drawback of the known chain branching agent is that the resulting polyamide composition exhibits viscosity values that are poorly reproducible, with differences in viscosity occurring not only between different lots but also between different granules within a lot. These differences greatly interfere with stable processing of the polyamide composition by means of an extrusion or injection moulding technique to form moulded articles.

The object of the invention therefore is to provide a chain branching agent containing anhydride groups that can be used for the preparation of a polyamide composition with non-Newtonian melt flow behaviour and that does not exhibit said drawbacks or exhibits them to a substantially decreased extent.

Surprisingly, this aim is achieved according to the invention with a chain branching agent that consists of
(a) 5-75 mass % of a copolymer of at least an unsaturated dicarboxylic acid or a derivative thereof and a vinyl aromatic monomer,
(b) 5-75 mass % of a copolymer of acrylonitrile and a vinyl aromatic monomer;
(c) 0-80 mass % of a thermoplastic polyolefin chosen from the group consisting of low density polyethylene, high density polyethylene, plastomers, ethylene vinyl acetate copolymer, ethylene copolymers with an alkyl(meth)acrylate, propylene homopolymer and polypropylene copolymers; and
(d) 0-10 mass % customary additives;
and in which (a) and (b) are miscible, the ratio (a)/(b) is from 1/3 to 3/1, and the total of (a)+(b)+(c)+(d) is 100%.

Use of the chain branching agent according to the invention yields a much better reproducibility when preparing a polyamide composition with non-Newtonian melt flow behaviour and allows much more accurate control of the viscosity, while in addition hardly any problems are caused by formation of gel particles. Another advantage is that larger amounts of chain branching agent can be added, so that there are fewer dosing problems in the production of a polyamide composition.

Examples of suitable unsaturated dicarboxylic acids or derivatives thereof that can be used as monomer for component (a) are maleic acid or itaconic acid, or derivatives thereof, for example maleic anhydride (MA), N-phenyl maleinimide or itaconic anhydride. Dicarboxylic acid derivatives are here understood to be in particular anhydride or imide derivatives. Examples of suitable vinyl aromatic monomers are styrene, α-methylstyrene, or a styrene in which the aromatic ring contains a halogen or alkyl substituent. At least is here understood to mean that the copolymer (a) may also contain a minor amount of one or more other monomers. Preferably, however, (a) is a copolymer of maleic anhydride and styrene (SMA). The MA content of (a) generally lies between 5 and 40 mass %, preferably between 10 and 35, and more preferably between 20 and 30 mass %. The advantage of a high MA content is that a higher degree of branching can be achieved through reaction with a thermoplastic polymer containing amine groups, for example a polyamide. A further advantage of the chain branching agent according to the invention is that such a high MA content can be used without any undesirable degree of polymer chain crosslinking and formation of insoluble particles (gel particles) occurring

Suitable vinyl aromatic monomers in component (b) are the same as described for (a), with (b) preferably being a copolymer of styrene and acrylonitrile (SAN). The acrylonitrile (AN) content of (b) generally lies between 5 and 40 mass %, preferably between 10 and 35, and more preferably between 20 and 30 mass %. The advantage of a higher AN content is a higher polarity of the copolymer, which improves the compatibility with other polar polymers such as a polyamide.

As a rule, an SMA copolymer is miscible with a SAN copolymer if the ratio between the MA content and the AN content of the respective copolymers is roughly between 1.6 and 0.6. Preferably the chain branching agent according to the invention therefore contains SMA and SAN copolymers with a ratio between the MA content and the AN content of between 1.6 and 0.6, more preferably between 1.2 and 0.8.

The ratio between the amounts of components (a) and (b) in the chain branching agent according to the invention varies between 3/1 and 1/3. Preferably the (a)/(b) ratio lies between 2/1 and 1/2. This has the advantage that a better dispersion of the chain branching agent according to the invention in polyamide is obtained.

The chain branching agent according to the invention contains 10-80 mass % of thermoplastic polymer as a processing aid. This has as advantages a much simpler mixing process for the preparation of a chain branching agent according to the invention and in addition dosing of the chain branching agent is greatly improved and can be controlled much more accurately. This inert processing aid also serves as carrier material for the preparation of a chain branching agent in the form of a SMA and SAN concentrate. Inert is understood to mean that the processing aid or the carrier material does not react with the other components (a) and (b) and with a thermoplastic polymer containing amine groups to which the chain branching agent is later added, and neither does it interfere to any undesirable extent with the reaction between anhydride groups and amine groups. The inert processing aid is a thermoplastic polyolefin chosen from the group consisting of low density polyethylene (LDPE) high density polyethylene (HDPE), plastomers, ethylene vinyl acetate copolymer, ethylene copolymers with an alkyl(meth)acrylate, propylene homopolymer and polypropylene copolymers; The chain branching agent according to the invention preferably contains an LDPE as inert processing aid in view of its good processability. In a special embodiment the chain branching agent according to the invention contains between 40 and 80 mass % of an inert processing aid.

As additives (d) the chain branching agent according to the invention may contain the customary stabilizers, antioxidants and the like. The chain branching agent may also contain compounds that promote the desired reaction between anhydride groups of the chain branching agent and amine groups of a thermoplastic polymer.

An the process for preparing the chain branching agent according to the invention, the components (a), (b), (c) and (d) are melt mixed and then formed into a granulate. This granulate is preferably granular, with dimensions comparable to those of plastics granulate known to one skilled in the art, but may also be in powder form. The advantages of a granular granulate are the good dosing properties and good mixing with other granular components, such as plastics granulate.

The invention also relates to the use of a chain branching agent according to the invention as additive to increase the viscosity of a thermoplastic polymer containing amine groups. Preferably this thermoplastic polymer containing amine groups is a polyamide.

The invention also relates to a process for preparing a polyamide composition with non-Newtonian melt flow behaviour in which a polyamide having a lower viscosity and substantially Newtonian melt flow behaviour is melt mixed with a chain branching agent containing anhydride groups according to the invention and optionally other additives.

Suitable polyamides are generally all thermoplastic polyamides, but preferably semi-crystalline polyamides in view of their favourable processing and mechanical properties. Examples include polyamide 6 (PA 6), PA 66, PA 46, PA 69, PA 610, PA 11, PA 12, PA MXD6, and copolymers and mixtures of such polyamides. Preferably the polyamide is a PA 6, PA 66, PA 46 or a copolyamide thereof.

Preferably the polyamide used in the process according to the invention, in particular PA 6, has a relative solution viscosity (RSV) of 2.0 to 3.5 (measured on a 1 mass % solution in 90% formic acid at 25°C). More preferably, the polyamide has an RSV of 2.2 to 2.8 ,and most preferably of 2.3 to 2.6.

Suitable polyamides generally have 0.1 to 1 amine group as end groups per linear chain molecule, the amine groups content preferably being at least 20 meq/kg, more preferably 30 meq/kg and most preferably 40 meq/kg. The advantage of a higher amine groups content is a stronger increase in viscosity and more pronounced non-Newtonian melt flow behaviour as a result of reaction with anhydride groups in the chain branching agent

Preferably such an amount of chain branching agent is added in the process according to the invention that the content of component (a) in the polyamide composition is 0.01-6 mass % relative to the polyamide, more preferably 0.05-3, and most preferably 0.1-1.5 mass %, the higher contents relating to an SMA with a low anhydride groups content and the other way round. A larger amount of chain branching agent and/or a higher anhydride groups content in the chain branching agent generally results in a stronger increase in the viscosity and more pronounced non-Newtonian melt flow behaviour of the polyamide composition.

The polyamide composition made using the process according to the invention may also contain 0-60 mass % other additives. Preferably these additives are chosen so that they do not significantly interfere with the desired reaction between amine groups and anhydride groups. Examples of additives are stabilizers, antioxidants, colourants, release agents and lubricants and the like, flame retardants, impact modifiers, and fillers and reinforcing agents. Preferably the polyamide composition contains at least a combination of a copper salt and an alkali halide, such as Cu/KI, as stabilizer. Examples of suitable impact modifiers are rubber-like polymers that not only contain apolar monomers such as olefins, but also polar or reactive monomers such as, among others, acrylates, epoxide. acid or anhydride containing monomers. Examples include a copolymer of ethylene with (meth)acrylic acid or an ethylene/propylene copolymer functionalized with anhydride groups. The advantage of such additives is that they do not only improve the impact strength of the polyamide composition but also contribute to an increase in viscosity. Suitable fillers and reinforcing agents are mineral fillers such as clay, mica, talc, glass spheres and fibrous reinforcing agents such as glass fibres. As reinforcing agent the polyamide composition preferably contains 5-50 mass % glass fibres, relative to the total composition, more preferably 10-45, and most preferably 15-40 mass % glass fibres. Suitable glass fibres generally have a diameter of 5-20 micron, preferably 8-15 micron, and are provided with a coating suitable for use in polyamide. The advantage of a polyamide composition with glass fibres is its increased strength and stiffness, particularly also at higher temperatures, which allows use at temperatures up to close to the melting point of the polyamide in the polyamide composition. This is important especially for use in the automotive sector, and particularly in or near the engine compartment.

In a preferred embodiment of the process according to the invention, polyamide, chain branching agent according to the invention and other additives (components) are melt mixed using an extruder, preferably a twin-screw extruder, it being possible for components to be supplied both to the throat of the extruder and to the melt. The temperature at which the process is carried out depends on the melting point of the polyamide used and generally lies between 200 and 350°C. Preferably such a throughput rate is chosen that the residence time in the extruder, combined with the temperature, is sufficient for the reaction between anhydride groups of the chain branching agent and amine groups of the polyamide to take place virtually completely. The advantage of a complete reaction is that the polyamide composition with not undergo any strong changes in viscosity when it is later melt-processed using a shaping technique. Surprisingly, it has been found that this reaction proceeds virtually to completion with the chain branching agent according to the invention, whereas when use is made of a pure SMA as chain branching agent the reaction does not proceed to completion in the same available time, while moreover no or hardly any gel particles are formed with the chain branching agent according to the invention.

After melt mixing and granulation followed by drying, the polyamide composition is suitable for further use. If desired the viscosity can be increased further by means of a solid-phase post-condensation reaction. This involves exposure of the polyamide composition under reduced pressure for, for example, 1-50 hours to a temperature up to at most about 10°C below the melting point of the polyamide in the polyamide composition until the desired viscosity level is reached. Such a post-condensation is applied in particular for the preparation of a polyamide composition to be processed by means of an extrusion blow moulding technique, this yielding an even better melt strength.

In another embodiment of the process according to the invention the components of a polyamide composition are first mixed in solid condition and melt mixing takes place during a shaping step, for example during a an extrusion or injection moulding technique. The advantage compared with a process in which first a polyamide composition is prepared, which is then shaped, is that one processing step is left out. This process is possible because the chain branching agent according to the invention is more readily and better dispersed in a polyamide and the chain branching reaction takes place in a more controlled way than when using a state of the art chain branching agent.

In a special embodiment a polyamide composition as obtained in granular form using the process according to the invention is then mixed with granules of a conventional polyamide composition having a lower viscosity and optionally a different composition, and processed as such as a granular mixture in a shaping step. This has the advantage that various compositions whose rheological properties are suited to the demands of a particular application can be obtained in a flexible and economic manner.

The invention also relates to a polyamide composition that can be obtained with the process according to the invention.

Compositions containing PA6, SAN and SMA are also known inter alia from the publication in J. Polym. Sci., Part B: Polym. Phys. 30(11), 1273-84 (1992), but these are mixtures of, for example, 75 mass % PA6 with SAN, to which a smaller amount of SMA is added as compatibilizer, for example about 2.5 mass %. It is the effects on the morphology of the mixture that are important here, not the rheological behaviour.

The invention therefore also relates to a polyamide composition with non-Newtonian melt flow behaviour containing a polyamide, such an amount of chain branching agent according to the invention that the content of component (a) is 0.01-6, preferably 0.05-3, and most preferably 0.1-1.5 mass % (relative to the polyamide), and 0-60 mass % of other additives, of which preferably 10-45 mass % glass fibres.

The invention also relates to the use of a polyamide composition according to the invention for manufacturing a part or moulded article by means of an injection moulding or extrusion technique. The higher viscosity and the non-Newtonian rheological behaviour of the polyamide composition according to the invention is advantageous in particular when shaping takes place by means of extrusion, for example into a rod, profile or tube, and in particular when a (hollow) moulded article is manufactured using an extrusion blow moulding technique. Extrusion blow moulding generally involves the manufacture of a tubular, still molten preform, the melt strength of the polyamide composition having to be such that the preform does not stretch or change shape under its own weight. Examples of extrusion blow moulding techniques that are used in practice include coextrusion blow moulding, sequential extrusion blow moulding and 3D extrusion blow moulding. The polyamide composition according to the invention also offers advantages when processing takes place by means of an injection moulding technique, because the high viscosity at a low shear rate to a large extent prevents the formation of burs caused by the flow of the molten polyamide composition between mould parts.

The invention also relates to a process for the preparation of a moulded article in which at least two parts, for instance obtained by means of an injection moulding or extrusion technique, are bonded together by means of a welding technique, with at least one of the parts substantially consisting, at least at the location of a surface to be welded, of a polyamide composition according to the invention.

A special embodiment is a process in which all parts substantially consist of a polyamide composition according to the invention, so that an optimum weld seam strength is obtained.

A welding technique is here understood to be a way of bonding several parts together in which the plastic is heated to above its melting point at the location of the contact areas to be bonded together, following which the parts are pressed together and cooled. Heating of the contact areas can be effected in several ways, for instance by contacting the contact areas with a heated metal plate, by heating the plastic using ultrasonic vibrations (ultrasonic welding), or by generating friction heat by rotating the contact areas against each other (rotation welding) or rubbing them together (vibration welding) at a high speed. Preferably vibration welding is used for joining parts as this makes it possible to produce complex moulded articles. It has been found that if at least one part is made from a polyamide composition according to the invention this results in a substantial improvement of the weld seam strength.

The invention also relates to a moulded article obtainable by means of an injection moulding or extrusion technique and to a moulded article consisting of two or more parts bonded together by means of a welding technique, which moulded parts contain a polyamide composition according to the invention.

In particular the invention relates to a moulded article for use in the automotive industry, such as a convoluted tube, a bellows, a liquid container, a component of the fuel system, an air-inlet manifold or an air duct.

The invention will now be further elucidated on the basis of the following examples and comparative experiments.

### Materials used:

- SMA: a styrene-maleic anhydride copolymer with an MA content of 28 mass % and an M_{w} of approx. 110,000 g/mol (type Stapron® SZ28110, DSM, NL);
- SAN: a styrene-acrylonitrile copolymer with an AN content of 28 mass %, MFI (220°C, 10 kg) 50 g/10min (DSM, NL);
- LDPE: a low-density polyethylene (type Lupolen® 1810H, BASF, DE);
- EP rubber: Impact modifier, ethylene-propylene rubber modified with approx. 0.5 mass % MA, MFI (230 °C, 2.16 kg) = 0.7 g/10min, density 0.87 g/cm³ (type Tafmer® MP061 0, Mitsui, JP)
- PA 6: a polyamide 6 with RSV=2.5 (1 mass % in formic acid, 25°C), Mₙ approx. 15,000 g/mol, M_{w} approx. 29,000 g/mol, amine groups content 48 meq/kg (type Akulon® C225, DSM, NL);
- GF: standard polyamide glass fibres, fibre diameter 10 mm
- PA 6 GF30: a standard injection-moulding polyamide 6 type with 30 mass % glass fibres, heat-stabilized, coloured black (type Akulon ® K224-HG6, DSM, NL);

### Reference-Example I

A 50/50 (m/m) mixture of SMA and SAN was prepared by feeding the two components to a ZSK57 twin-screw extruder, with a temperature setting of 230°C, at a speed of 200 r.p.m. Only with great difficulty could the exiting, clear melt be processed into granules, the strand formed being very brittle.

### Example II

On a ZSK57, with a temperature setting of 230 °C and at a speed of 200 rpm, a mixture of SMA/SAN/LDPE was prepared, in a mass ratio of 25/25/50. The throughput rate was 110 kg/hour, with 85% torque as control value. The mixture was readily extruded and processed into granules with regular dimensions.

### Examples III and IV

In an analogous manner to Example II SMA/SAN/LDPE mixtures with mass ratios of 37.5/37.5/25 and 12.5/12.5/75 were prepared. The processability of the sample with 25% LDPE was slightly lower than that of the other samples.

### Comparative-Example A and comparative experiment B

The compositions indicated in Table 1 were prepared by feeding PA 6, chain branching agent according to Reference Example I or SMA, 0.3 mass % copper/iodide stabilizer and 0.5 mass % black colour concentrate to the throat of a ZSK57. Furthermore an impact modifier was added. This modifier consisted in part of a modified EP rubber and in part of LDPE. The temperature was set at 270°C, the throughput rate was about 50 kg/hour and the melt was degassed by applying a negative pressure. The extruded strands were chopped into granules and dried. Subsequently the materials were post-condensed in the solid phase at a granule temperature of 185°C until the materials had an RSV of 5.1 (1 mass % in formic acid, 25°C).

The rheological behaviour of the compositions was measured by means of a Rheometrics RMS800 Dynamic-Mechanical Spectrometer (DMS) in the shear rate range of 0.1-100 rad/s at a temperature of 260 °C (parallel plate geometry, diameter = 25 mm).

The results are summarized in Table 1. From the higher melt viscosity found it can be deduced that a chain branching agent according to Reference-Example I is more effective than pure SMA. This is also apparent from the higher viscosity ratio at low and high shear rates, respectively. In addition, a melt drawing test (melt temperature = 260°C) was conducted. The force needed to draw the strand in the melt is a measure of the melt strength of the material. The melt drawability is sensitive to inhomogeneities in the melt such as gels.

The higher melt drawing force is indicative of the increased effectiveness of the branching reaction and the higher melt drawability indicates that the number of gel particles is reduced in comparison with the comparative experiment.

**Table 1**

| | *unit* | Comparative Example A | Comp. Exp. B |
|---|---|---|---|
| *Composition* | | | |
| PA 6 | mass % | 88.5 | 88.9 |
| Reference-Example I | mass % | 0.72 | 0 |
| SMA | mass % | 0 | 0.36 |
| EP rubber | mass % | 4.0 | 4.0 |
| LDPE | mass % | 6.0 | 6.0 |
| *rheological properties* | | | |
| RSV | | 5.1 | 5.1 |
| η (0.1 rad/s) | Pa.s | 22,400 | 17,800 |
| η (100 radls) | Pa.s | 1600 | 1550 |
| η (0.1 )/η (100) | | 14.0 | 11.5 |
| Melt drawability | | 38 | 24 |
| Melt drawing force | cN | 8.5 | 7.9 |

### Examples V-VI and comparative experiments C-D

The compositions indicated in Table 2 were prepared by feeding PA 6, chain branching agent according to Example II or SMA, 0.25 mass % copper/iodide stabilizer, 0.3 mass % release agent and 2.0 mass % black colour concentrate to the throat of a ZSK30 twin-screw extruder and 30 mass% glass fibre via a side feed to the melt. The temperature was set at 270°C, the throughput rate was about 10 kg/hour and the melt was degassed by applying a reduced pressure. The extruded strands were chopped into granules and dried. In comparative experiment A a commercial PA6 GF30 was used as reference material.

The rheological behaviour of the compositions was measured by means of a Rheometrics RMS800 Dynamic-Mechanical Spectrometer (DMS) in the shear rate range of 0.1-100 rad/s at a temperature of 260 °C (parallel plate geometry, diameter = 25 mm)

The compositions were processed into test bars on an Engel 80e injection moulding machine, with a temperature setting of 260°C (melt temperature).

The tensile properties were determined in accordance with ISO 527-1, the impact strength was measured in accordance with ISO 179/1eU and ISO179/1eA.

The results are summarized in Table 2. From the higher melt viscosity found it can be deduced that a chain branching agent according to the invention is more effective than pure SMA. In addition, during the injection moulding of Examples V-VI a more stable process was observed, with smaller pressure variations with time, than in comparative experiment C. The increased viscosity is not found to have any adverse effect on the injection moulding behaviour as such, supporting a non-Newtonian flow behaviour. The higher viscosity does result in higher toughness of the polyamide composition, judging from the somewhat higher elongation at break and (unnotched) impact strength and the slight decrease in tensile strength.

**Table 2**

| | *unit* | Ex. V | Ex. VI | comp. Exp. C | Comp. Exp. D |
|---|---|---|---|---|---|
| *composition* | | | | | |
| PA 6 | mass % | 66.3 | 65.7 | PA 6 GF30 | 67.0 |
| GF | mass % | 30.0 | 30.0 | | 30 |
| Example II | mass % | 1.2 | 1.8 | 0 | 0 |
| SMA | mass % | 0 | 0 | 0 | 0.45 |

| *tensile properties* | | | | | |
|---|---|---|---|---|---|
| E-modulus | MPa | 9830 | 9690 | 9680 | 9440 |
| Tensile strength | MPa | 160 | 155 | 169 | 170 |
| Elongation at break | % | 4.1 | 4.3 | 3.7 | 4.0 |

| *impact strength* | | | | | |
|---|---|---|---|---|---|
| Charpy notched, 23°C | kJ/m² | 16 | 15 | 15 | 14 |
| Ch. unnotched, 23°C | kJ/m² | 92 | 86 | 82 | 99 |
| Charpy notched, -30°C | kJ/m² | 9 | 9 | 9 | 9 |
| Ch. unnotched, -30°C | kJ/m² | 75 | 73 | 68 | 78 |

| *rheological properties* | | | | | |
|---|---|---|---|---|---|
| RSV | | 3.35 | 3.88 | 2.4 | |
| η (0.1 rad/s) | Pa.s | 7450 | 15150 | 940 | 8900 |
| η (100 rad/s) | Pa.s | 2230 | 2610 | 850 | 2150 |
| η(0.1)/η (100) | | 3.3 | 5.8 | 1.1 | 4.1 |

### Example VII

Analogously to Examples III and IV a larger amount of a polyamide composition with 1.1 mass % of the chain branching agent from Example II was prepared using a ZSK58 extruder, temperature setting 250°C and throughput rate about 150 kg/hour at a speed of 250 rpm. The product had an RSV of 3.43. By means of DMS η (0.1 rad/s) was measured to be 7415 and η (100 rad/s) = 1990, so that η (0.1)/η(100) was 3.4.

This polyamide composition and the reference material PA 6 GF30 (comparative experiment C) were injection moulded into two articles which were subsequently joined by means of vibration welding to form an air-inlet manifold. In general, the resulting weld seam is the weakest point of such a part. Its strength was determined by means of bursting pressure tests under different conditions. The results obtained are presented in Table 3. It can be concluded that the polyamide composition according to the invention results in an appreciably higher weld seam strength than the reference material, while in addition it meets the required minimum values for this moulded article.

**Table 3**

| | *Unit* | *requirement* | Example VII | Comp. Exp. C |
|---|---|---|---|---|
| Bursting pressure at 23°C | MPa | ≥ 0.55 | 0.66 | 0.40 |
| Bursting pressure at -30°C | MPa | ≥ 0.45 | 0.60 | 0.34 |
| Bursting pressure at 120°C | MPa | ≥ 0.50 | 0.50 | 0.42 |

## Claims

1. Chain branching agent containing anhydride groups, **characterized in that** the chain branching agent consists of
(a) 5-75 mass % of a copolymer of at least ah unsaturated dicarboxylic acid or a derivative thereof and a vinyl aromatic monomer;
(b) 5-75 mass % of a copolymer of acrylonitrile and vinyl aromatic monomer;
(c) 10-80 mass % of a thermoplastic Polyolefin chosen from the group consisting of low density polyethylene, high density polyethylene, plastomers, ethylene vinyl acetate copolymer, ethylene copolymers with an alkyl(meth)acrylate, Propylene homopolymer and polypropylene copolymers; and
(d) 0-10 mass % customary additives;
and in which (a) and (b) are miscible, the ratio (a)/(b) is from 1/3 to 3/1, and the total of (a)+(b)+(c)+(d) is 100%.

2. Chain branching agent according to claim 1, in which (a) is a copolymer of maleic anhydride and styrene and (b) is a copolymer of acrylonitrile and styrene.

3. Chain branching agent according to claim 1 or 2, which contains 40-80 mass % (c).

4. Chain branching agent according to any one of claims 1-3. which contains 10-30 mass % (a) and 10-30 mass % (b).

5. Chain branching agent according to any one of claims 1-4, in which (a) and (b) contain 10-35 mass % maleic anhydride and acrylonitrile, respectively.

6. Chain branching agent according to any one of claims 1-5, in which (a) and (b) contain 20-30 mass % maleic anhydride and acrylonitrile, respectively.

7. Chain branching agent according to any one of claims 1-6, in which the ratio (a) /(b) lies between 2/1 and 1/2.

8. Chain branching agent according to claim 7, in which the processing aid is a low-density polyethylene.

9. Process for preparing a polyamide composition with non-Newtonian melt flow behaviour, in which a polyamide having a lower viscosity and substantially Newtonian melt flow behaviour is melt mixed with a chain branching agent containing anhydride groups and optionally other additives, **characterized in that** a chain branching agent according to any one of claims 1-8 is is used.

10. Process according to claim 9, the polyamide being a PA 6, PA 66, PA 46 or a copolyamide thereof.

11. Process according to either of claims 9-10, the polyamide having an amine groups content of at least 20 meq/kg.

12. Process according to any one of claims 10-11, in which such an amount of chain branching agent is used that the polyamide composition has a content of component (a) of 0.01-6 mass % (relative to the polyamide).

13. Process according to any one of claims 10-12, in which use is at least made of 15-40 mass % glass fibre as additive.

14. Polyamide composition obtainable with a process according to any one of claims 10-13.

15. Polyamide composition with non-Newtonian melt flow behaviour consisting of a polyamide, such an amount of chain branching agent according to any one of claims 1-8 that the content of component (a) is 0.01-6 mass % (relative to the polyamide), and 0-60 mass % other additives.

16. Use of a polyamide composition according to claim 14 or 15 for the manufacture of a part or moulded article by means of an injection moulding or extrusion technique.

17. Use according to claim 16, the extrusion technique being an extrusion blow moulding technique.

18. Process for the preparation of a moulded article in which at least two parts are bonded together by means of a welding technique, **characterized in that** at least one of the parts substantially consists, at least at the location of a surface to be welded, of a polyamide composition according to claim 14 or 15.

19. Process according to claim 18, in which all parts substantially consist of a polyamide composition according to claim 14 or 15.

20. Process according to either of claims 18-19, vibration welding being used as the welding technique.

21. Moulded articles obtainable with the process according to any one of claims 19-20.

22. Moulded articles according to claim 21 for use in the automotive industry, such as a convoluted tube, a bellows, a liquid container, a component of the fuel system, an air-inlet manifold or an air duct.

## Patentansprüche

1. Kettenverzweigungsmittel mit Anhydridgruppen, **dadurch gekennzeichnet, dass** das Kettenverzweigungsmittel besteht aus
(a) 5-75 Masse-% eines Copolymers aus mindestens einer ungesättigten Dicarbonsäure oder einem Derivat davon und einem aromatischen Vinylmonomer;
(b) 5-75 Masse-% eines Copolymers aus Acrylnitril und einem aromatischen Vinylmonomer;
(c) 10-80 Masse-% eines thermoplastischen Polyolefins, ausgewählt aus der Gruppe bestehend aus Polyethylen niedriger Dichte, hochdichtem Polyethylen, Plastomeren, EthylenVinylacetat-Copolymer, Ethylencopolymeren mit einem Alkyl(meth)acrylat, Propylen-Homopolymer und Polypropylen-Copolymeren, und
(d) 0-10 Masse-% übliche Zusätze;
und wobei (a) und (b) mischbar sind, das Verhältnis (a)/(b) von 1/3 bis 3/1 ist und (a) + (b) + (c) + (d) insgesamt 100 % ergeben.

2. Kettenverzweigungsmittel nach Anspruch 1, wobei (a) ein Copolymer aus Maleinsäureanhydrid und Styrol und (b) ein Copolymer aus Acrylnitril und Styrol ist.

3. Kettenverzweigungsmittel nach Anspruch 1 oder 2, das 40-80 Masse-% (c) enthält.

4. Kettenverzweigungsmittel nach einem der Ansprüche 1-3, das 10-30 Masse-% (a) und 10-30 Masse-% (b) enthält.

5. Kettenverzweigungsmittel nach einem der Ansprüche 1-4, wobei (a) und (b) 10-35 Masse-% Maleinsäureanhydrid bzw. Acrylnitril enthalten.

6. Kettenverzweigungsmittel nach einem der Ansprüche 1-5, wobei (a) und (b) 20-30 Masse-% Maleinsäureanhydrid bzw. Acrylnitril enthalten.

7. Kettenverzweigungsmittel nach einem der Ansprüche 1-6, wobei das Verhältnis (a)/(b) zwischen 2/1 und 1/2 liegt.

8. Kettenverzweigungsmittel nach Anspruch 7, wobei das Verarbeitungshilfsmittel ein Polyethylen niedriger Dichte ist.

9. Verfahren zur Herstellung einer Polyamidzusammensetzung mit nicht-Newtonschem Fließverhalten, wobei ein Polyamid mit einer niedrigen Viskosität und einem im Wesentlichen Newtonschen Fließverhalten in der Schmelze mit einem Anhydridgruppen und fakultativ anderen Zusätzen enthaltenden Kettenverzweigungsmittel vermischt wird, **dadurch gekennzeichnet, dass** ein Kettenverzweigungsmittel nach einem der Ansprüche 1-8 verwendet wird.

10. Verfahren nach Anspruch 9, wobei das Polyamid ein PA 6, PA 66, PA 46 oder ein Copolyamid davon ist.

11. Verfahren nach einem der Ansprüche 9-10, wobei das Polyamid einen Gehalt an Amingruppen von mindestens 20 meq/kg aufweist.

12. Verfahren nach einem der Ansprüche 10-11, wobei eine derartige Menge an Kettenverzweigungsmittel verwendet wird, dass die Polyamidzusammensetzung einen Gehalt an Bestandteil (a) von 0,01-6 Masse-% (bezogen auf das Polyamid) aufweist.

13. Verfahren nach einem der Ansprüche 10-12, wobei mindestens 15-40 Masse-% Glasfasern als Zusatz verwendet werden.

14. Polyamidzusammensetzung, die mittels eines Verfahrens nach einem der Ansprüche 10-13 erhältlich ist.

15. Polyamidzusammensetzung mit nicht-Newtonschem Fließverhalten, bestehend aus einem Polyamid, einer derartigen Menge an Kettenverzweigungsmittel nach einem der Ansprüche 1-8, dass der Gehalt an Bestandteil (a) 0,01-6 Masse-% (bezogen auf das Polyamid) beträgt, und 0-60 Masse-% andere Zusätze.

16. Verwendung einer Polyamidzusammensetzung nach Anspruch 14 oder 15 zur Herstellung eines Teils oder eines Formteils mittels einer Spritzguss-oder Extrusionstechnik.

17. Verwendung nach Anspruch 16, wobei die Extrusionstechnik eine Extrusions-Blasform-Technik ist.

18. Verfahren zur Herstellung eines Formteils, wobei mindestens zwei Teile mittels einer Schweißtechnik miteinander verbunden werden, **dadurch gekennzeichnet, dass** mindestens eines der Teile mindestens an der zu schweißenden Stelle einer Oberfläche im Wesentlichen aus einer Polyamidzusammensetzung nach Anspruch 14 oder 15 besteht.

19. Verfahren nach Anspruch 18, wobei alle Teile im Wesentlichen aus einer Polyamidzusammensetzung nach Anspruch 14 oder 15 bestehen.

20. Verfahren nach einem der Ansprüche 18-19, wobei als Schweißtechnik Vibrationsschweißen verwendet wird.

21. Formteile, die mittels des Verfahrens nach einem der Ansprüche 19-20 erhältlich sind.

22. Formteile nach Anspruch 21 zur Verwendung in der Automobilindustrie, wie ein gewundener Schlauch, ein Faltenbalg, ein Flüssigkeitsbehälter, ein Bestandteil des Kraftstoffsystems, ein Einlasskrümmer oder ein Luftkanal.

## Revendications

1. Agent de ramification de chaîne contenant des groupes anhydride, lequel agent de ramification de chaîne est composé de
(a) 5 à 75 % en masse d'un copolymère d'au moins un acide dicarboxylique insaturé ou d'un dérivé de celui-ci et d'un monomère aromatique vinylique ;
(b) 5 à 75 % en masse d'un copolymère d'acrylonitrile et d'un monomère aromatique vinylique ;
(c) 10 à 80 % en masse d'une polyoléfine thermoplastique choisie dans le groupe consistant en le polyéthylène à basse densité, le polyéthylène à haute densité, les plastomères, le copolymère d'éthylène et d'acétate de vinyle, les copolymères d'éthylène avec un (méth)acrylate d'alkyle, l'homopolymère de propylène et les copolymères de polypropylène ; et
(d) 0 à 10 % en masse d'additifs usuels ;
et dans lequel (a) et (b) sont miscibles, le rapport (a)/(b) est compris entre 1/3 et 3/1, et la somme de (a) + (b) + (c) + (d) est égale à 100 %.

2. Agent de ramification de chaîne selon la revendication 1, dans lequel (a) est un copolymère d'anhydride maléique et de styrène et (b) est un copolymère d'acrylonitrile et de styrène.

3. Agent de ramification de chaîne selon la revendication 1 ou 2, qui contient 40 à 80 % en masse de (c).

4. Agent de ramification de chaîne selon l'une quelconque des revendications 1 à 3, qui contient 10 à 30 % en masse de (a) et 10 à 30 % en masse de (b).

5. Agent de ramification de chaîne selon l'une quelconque des revendications 1 à 4, dans lequel (a) et (b) contiennent 10 à 35 % en masse d'anhydride maléique et d'acrylonitrile, respectivement.

6. Agent de ramification de chaîne selon l'une quelconque des revendications 1 à 5, dans lequel (a) et (b) contiennent 20 à 30 % en masse d'anhydride maléique et d'acrylonitrile, respectivement.

7. Agent de ramification de chaîne selon l'une quelconque des revendications 1 à 6, dans lequel le rapport (a)/(b) est compris entre 2/1 et 1/2.

8. Agent de ramification de chaîne selon la revendication 7, dans lequel l'adjuvant de fabrication est un polyéthylène à basse densité.

9. Procédé de préparation d'une composition de polyamide dotée d'un comportement de fluidité à l'état fondu non newtonien, dans lequel un polyamide ayant une viscosité inférieure et un comportement de fluidité à l'état fondu essentiellement newtonien est mélangé à l'état fondu à un agent de ramification de chaîne contenant des groupes anhydride et éventuellement d'autres additifs, **caractérisé en ce qu'**un agent de ramification de chaîne selon l'une quelconque des revendications 1 à 8 est utilisé.

10. Procédé selon la revendication 9, dans lequel le polyamide est un PA 6, PA 66, PA 46 ou un copolyamide de ceux-ci.

11. Procédé selon l'une ou l'autre des revendications 9 et 10, dans lequel le polyamide a une teneur en groupes amine d'au moins 20 meq/kg.

12. Procédé selon l'une quelconque des revendications 10 et 11, dans lequel la quantité d'agent de ramification de chaîne utilisée est telle que la composition de polyamide a une teneur en composant (a) de 0,01 à 6 % en masse (par rapport au polyamide).

13. Procédé selon l'une quelconque des revendications 10 à 12, dans lequel au moins 15 à 40 % en masse de fibres de verre sont utilisés en tant qu'additif.

14. Composition de polyamide pouvant être obtenue à l'aide d'un procédé selon l'une quelconque des revendications 10 à 13.

15. Composition de polyamide dotée d'un comportement de fluidité à l'état fondu non newtonien contenant un polyamide, une quantité d'agent de ramification de chaîne selon l'une quelconque des revendications 1 à 8 telle que la teneur en composant (a) est de 0,01 à 6 % en masse (par rapport au polyamide), et de 0 à 60 % en masse d'autres additifs.

16. Utilisation d'une composition de polyamide selon la revendication 14 ou 15 pour la fabrication d'une pièce ou d'un article moulé à l'aide d'une technique de moulage par injection ou d'extrusion.

17. Utilisation selon la revendication 16, dans lequel la technique d'extrusion est une technique de moulage par extrusion-soufflage.

18. Procédé de préparation d'un article moulé dans lequel au moins deux pièces sont collées ensemble à l'aide d'une technique de soudage, **caractérisé en ce qu'**au moins l'une des pièces est composée en grande partie, au moins à l'endroit d'une surface à souder, d'une composition de polyamide selon la revendication 14 ou 15.

19. Procédé selon la revendication 18, dans lequel toutes les pièces sont composées en grande partie d'une composition de polyamide selon la revendication 14 ou 15.

20. Procédé selon l'une ou l'autre des revendications 18 à 19, dans lequel le soudage par vibration est utilisé comme technique de soudage.

21. Articles moulés pouvant être obtenus à l'aide du procédé selon l'une quelconque des revendications 19 à 20.

22. Articles moulés selon la revendication 21 destinés à une utilisation dans l'industrie automobile, tels qu'un tube alvéolé, un soufflet, un récipient pour liquide, un composant de circuit de carburant, un collecteur d'arrivée d'air ou une conduite d'air.
